**Europäisches Patentamt**

**European Patent Office**

**Office européen des brevets**

(19)

(11) Veröffentlichungsnummer: **0 040 388**

**A1**

(12) **EUROPÄISCHE PATENTANMELDUNG**

(21) Anmeldenummer: **81103633.4**

(22) Anmeldetag: **12.05.81**

(51) Int. Cl.³: **B 65 G 69/28**

(30) Priorität: **17.05.80 DE 3018932**

(43) Veröffentlichungstag der Anmeldung:
**25.11.81 Patentblatt 81/47**

(84) Benannte Vertragsstaaten:
**AT BE CH DE FR GB IT LI NL SE**

(71) Anmelder: **Trepel AG**
**Alte Schmelze 18-22 Trepelhaus**
**D-6200 Wiesbaden-Schierstein(DE)**

(72) Erfinder: **Wörner, Axel**
**Lippstrasse 4**
**D-6200 Wiesbaden-Schierstein(DE)**

(72) Erfinder: **Möller, Hans-Jörg**
**Westring 60**
**D-6200 Wiesbaden-Nordenstadt(DE)**

(74) Vertreter: **Röbe-Oltmanns, Georg, Dr.**
**Dotzheimer Strasse 61**
**D-6200 Wiesbaden(DE)**

(54) **Überfahrbrücke für Rampen.**

(57) Die Erfindung betrifft eine Überfahrbrücke für Rampen und dgl., deren Überfahrblech mit dem einen Ende an einer feststehenden Rampe angelenkt ist und deren anderes Ende eine ausschiebbare oder ausklappbare Verlängerung besitzt, mit der das Überfahrblech auf eine zu be- bzw. entladende Plattform auflegbar ist.

Um zu verhindern, daß rückwärts an die Überfahrbrücke setzende Fahrzeuge diese bzw. das Überfahrblech oder die Verlängerung beschädigen wird erfindungsgemäß vorgeschlagen, daß das Überfahrblech (1) beidseitig gegenüber der Verlängerung (2) vorsteht und neben der Verlängerung (2) beidseitig jeweils ein bei Nichtgebrauch der Brücke gegenüber der Vorderkante des Überfahrbleches (1) vorstehender auf dem Boden (4) unter dem Überfahrblech (1) befestigter bei Gebrauch der Brücke unter das Überfahrblech (1) bewegbarer Puffer (3) angeordnet ist.

FIG.1

EP 0 040 388 A1

- 1 -

Die Erfindung betrifft eine Überfahrbrücke für Rampen und dergl., deren Überfahrblech mit dem einen Ende an einer feststehenden Rampe angelenkt ist und deren anderes Ende eine ausschiebbare oder ausklappbare Verlängerung besitzt, mit der das Überfahrblech auf eine zu be- bzw. entladene Plattform auflegbar ist.

Überfahrbrücken der genannten Art sind bekannt. Sie dienen dem Zwecke, Höhenunterschiede zwischen einer feststehenden Rampe und einer zu be- bzw. entladenden Plattform auszugleichen, wobei das freie Ende des Überfahrbleches der sich beim Be- und Entladen ändernden Höhe der Ladeplattform eines Lastkraftfahrzeuges anpaßt.

Die Überfahrbleche solcher Überfahrbrücken sind vielfach breiter als die Ladeplattform des zu be- bzw. entladenden Fahrzeuges, um die Möglichkeit zu schaffen, größere Güter noch auf dem Überfahrblech zu versetzen, damit sie in der gewünschten Stellung auf die Ladeplattform gebracht werden können bzw. umgekehrt. Bei Überfahrbrükken mit solchen breiten Überfahrblechen besteht die Gefahr, daß das zu be- bzw. entladende Fahrzeug, welches rückwärts an die Überfahrbrücke gesetzt wird, gegen die Überfahrbrücke und insbesondere gegen das Überfahrblech stößt und die Überfahrbrücke bzw. das Überfahrblech geschädigt.

Aufgabe vorliegender Erfindung ist es, eine Überfahrbrücke der eingangs genannten Art mit einem relativ breiten Überfahrblech zu schaffen, bei der die Gefahr, daß das rückwärts an die Überfahrbrücke setzende Fahrzeug diese bzw. das Überfahrblech oder die Verlängerung beschädigt, praktisch nicht mehr gegeben ist.

Diese Aufgabe wird bei einer Überfahrbrücke der eingangs genannten Art dadurch gelöst, daß das Überfahrblech beidseitig gegenüber der Verlängerung vorsteht und neben der Verlängerung beidseitig jeweils ein bei Nichtgebrauch

2.

der Brücke gegenüber der Vorderkante des Überfahrbleches vorstehender, auf dem Boden unter dem Überfahrblech befestigter bei Gebrauch der Brücke unter das Überfahrblech bewegbarer Puffer angeordnet ist.

Zweckmäßig ist es dabei, die Puffer um eine am Boden unter dem Überfahrblech oder im Unterrahmen befestigten Achse unter das Überfahrblech schwenkbar im Unterrahmen anzuordnen. Verschwenkt werden die Puffer zweckmäßig dabei mittels eines Arbeitszylinders, vorzugsweise Hydraulikzylinders, der mit einem Ende, vorzugsweise dem freien Ende der Kolbenstange an den Puffer angelenkt ist und dessen anderes Ende vorzugsweise der Zylinderboden auf dem Boden unter dem Überfahrblech oder im Unterrahmen gelenkig befestigt ist. Der Arbeitszylinder ist dabei ein beidseitig beaufschlagbarer.

Wird die Überfahrbrücke nicht benötigt, sind die Puffer hochgeschwenkt und stehen nach vorne gegenüber der freien Kante des Überfahrbleches und der Verlängerung vor. Wird jetzt ein Fahrzeug rückwärts gegen die Überfahrbrücke gesetzt, stößt das Fahrzeug gegen die Puffer und nicht gegen das Überfahrblech bzw. die Verlängerung. Das Überfahrblech bzw. die Verlängerung können also nicht beschädigt werden. Wird die Überfahrbrücke benötigt, werden die Puffer mittelt der Hydraulikzylinder unter das Überfahrblech geschwenkt und wird das Überfahrblech mit der Verlängerung in bekannter, nicht beschriebener Weise auf die zu be- bzw. entladende Plattform aufgelegt. Nach Beendigung der Be- bzw. Entladung und nach Abfahrt des Fahrzeuges wird das Überfahrblech mit der Verlängerung wieder in die Nichtgebrauchsstellung geschwenkt und werden die Puffer mittels der Hydraulikzylinder wieder hochgeschwenkt.

Weitere Merkmale der Erfindung sind in der Beschreibung der Figuren und in den Unteransprüchen dargestellt,

3.

wobei bemerkt wird, daß alle Einzelmerkmale und alle Kombinationen von Einzelmerkmalen erfindungswesentlich sind.

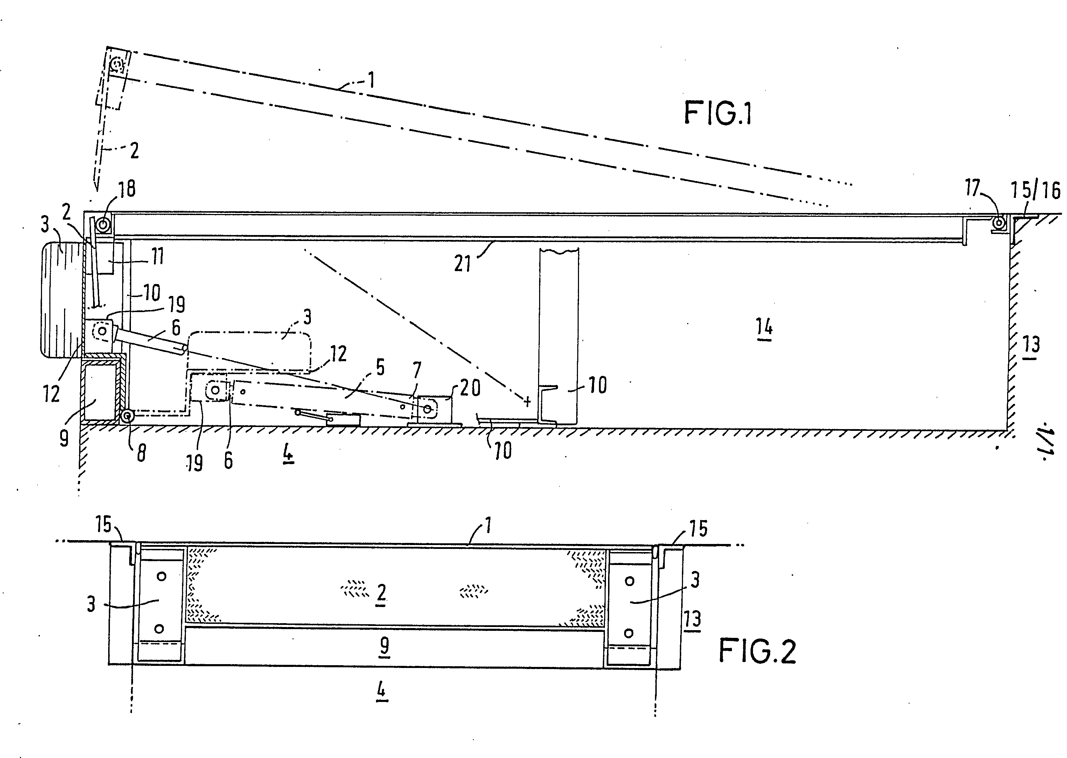

In den Figuren 1 und 2 ist die Erfindung an einer Ausführungsform beispielsweise dargestellt, ohne auf diese Ausführungsform beschränkt zu sein.

Fig. 1 zeigt eine Seiteneinsicht einer erfindungsgemäßen Überfahrbrücke und

Fig. 2 eine Vorderansicht einer erfindungsgemäßen Überfahrbrücke in der Nichtgebrauchsstellung

Die feststehende Rampe 13 weist für die Überfahrbrücke eine Ausnehmung 14 auf. Der Oberrahmen 15 der Überfahrbrücke ist ein Winkelprofil, welches mit dem waagerechten Schenkel auf der Oberfläche der feststehenden Schenkel Rampe aufliegt und mit dem senkrechten an den Seitenwänden und der Rückwand der Ausnehmung 14 anliegt und zwar derart, daß die Oberfläche der beiden Schenkel jeweils bündig mit der Oberfläche der Rampe bzw. der Seitenwände und der Rückwand abschließt. Am rückwärtigen Querteil 16 des Oberrahmens 15 ist das Überfahrblech 1 mit seinem rückwärtigen Ende um die Achse 17 schwenkbar angelenkt. Das gegenüberliegende freie Ende des Überfahrbleches 1 weist die um die Achse 18 in an sich bekannter Weise verschwenkbare Verlängerung 2 auf. In der dargestellten Nichtgebrauchsstellung ist die Verlängerung 2 mit ihrem freien Ende nach unten gerichtet. Sie kann dabei mit ihrem freien Ende in ein Winkelprofil oder dergl. eingesetzt sein, um dem Überfahrblech 1 einen sicheren Halt bei Nichtgebrauch zu geben. Wird die Überfahrbrücke gebraucht, wird das freie Ende des Überfahrbleches 1 hochgeschwenkt, wird dann die Verlängerung 2 mit ihrem freien Ende in die Ebene des Überfahrbleches 1 geklappt und wird dann das

4.

Überfahrblech 1 wieder abgesenkt, bis die Verlängerung 2 auf der zu be- bzw. entladenden Plattform aufliegt. Wie aus der Fig. 2 ersichtlich, ist das Überfahrblech 1 breiter als die Verlängerung 2 und steht beidseitig gegenüber dieser vor. In der Nichtgebrauchsstellung schließt das Überfahrblech 1 mit der Verlängerung 2 bündig mit der Vorderwand der feststehenden Rampe 13 ab. Die lichte Höhe der Ausnehmung 14 kann geringer sein als die Gesamthöhe der feststehenden Rampe 13.

Beidseitig neben der Verlängerung 2 sind oberhalb der Quertraverse 9 des Unterrahmens 10 unter das Überfahrblech 1 bewegbare Puffer 3 angeordnet. Diese Puffer 3 stehen nach vorne gegenüber dem Überfahrblech 1 und der Verlängerung 2, in deren Nichtgebrauchsstellung vor. Diese Puffer reichen nach oben nur soweit daß sie bei dem in der Nichtgebrauchsstellung befindlichem Überfahrblech 1 unter dieses bewegt werden können. Diese Puffer 3 bestehen vorzugsweise aus Hartgummi, welches mit Textilgewebe verstärkt ist. Auf der Rückseite weisen die Puffer 3 Metallplatten 12 als zusätzliche Verstärkung auf. Diese Metallplatte 12 ist in Höhe der Unterkante des Puffers 3 rechtwinkelig nach hinten abgebogen und an der Hinterfläche der vorderen Quertraverse 9 des Unterrahmens 10 wieder senkrecht nach unten. Das untere Ende dieser Metallplatte 9 ist auf dem Boden 4 oder im Unterrahmen 10 angelenkt. Um die Achse 8 ist die Metallplatte 12 mit dem Puffer 3 nach hinten schwenkbar. Auf der Rückseite des Puffers 3 ist an der Metallplatte 12 ein Doppelflansch 19 befestigt, in den das freie Ende der Kolbenstange 6 des Arbeitszylinders 5 schwenkbar befestigt ist. In Abstand von der vorderen Quertraverse 9 des Unterrahmens 10 ist auf dem Boden 4 der Ausnehmung 14 oder auch im Unterrahmen 10 ein weiterer Doppelflansch 20 befestigt, zwischen dessen beiden Schenkeln der Arbeitszylinder 5, zweckmäßig bei Hydraulikzylindern mit einem Ansatz am Zylinderboden 7 schwenkbar befestigt ist. Der Arbeitszylinder 5 ist voll nur in der Stellung dargestellt,

5.

die er einnimmt, wenn mittels des Arbeitszylinders 5 die Metallplatte 12 mit dem Puffer 3 unter das Überfahrblech 1 geschwenkt ist. Für die hochgeschwenkte Stellung des Puffers 3 ist nur das obere Ende der Kolbenstange 6 dargestellt. Das Überfahrblech 1 besitzt beidseitig neben der Verlängerung 2 Anschläge 11, an die die Puffer 3 mit der Metallplatte 12 anliegen, wenn die Puffer 3 hochgeschwenkt sind und das Überfahrblech 1 sich in der Nichtgebrauchsstellung befindet. Der Arbeitszylinder 5 ist beidseitig beaufschlagbar. Sind die Puffer 3 hochgeschwenkt, sind die Kolbenstangen 6 ausgefahren und sind die Räume zwischen dem nicht dargestellten Kolben und dem Zylinderboden 7 mit Öl gefüllt. Wird die Überfahrbrücke benötigt, wird das Überfahrblech hochgeschwenkt, dann die Verlängerung 2 ausgeschwenkt und anschließend das Überfahrblech 1 wieder abgesenkt bis die Verlängerung 2 mit ihrem freien Ende auf einer zu be- bzw. entladende Plattform aufliegt. Gleichzeitig wird der Raum auf der dem Zylinderboden 7 abgekehrten Seite des nicht dargestellten Kolbens des Arbeitszylinders 5 mit Öl beaufschlagt, dadurch die Kolbenstange eingefahren und der Puffer 3 mit der Metallplatte 12 unter das Überfahrblech 1 geschwenkt. Ist die Be- bzw. Entladung beendet, wird in umgekehrter Reihenfolge verfahren. Die Zuleitungen, das Antriebsaggregat usw. des Arbeitszylinders 5 sind als zum Stande der Technik gehörig nicht dargestellt und nicht beschrieben. Dieser Arbeitszylinder 5 kann jedoch, wenn es sich um eine Überfahrbrücke handelt, deren Überfahrblech hydraulisch gehoben und gesenkt wird mit der Steuerung des Hydraulikzylinders zum Heben und Senken des Überfahrbleches 1 entsprechend gekoppelt sein. Wird die Verlängerung 2 ebenfalls hydraulisch ein- und ausgeschwenkt, ist eine Koppelung aller drei Zylinder möglich. Das Überfahrblech 1 weist auf der Unterseite in üblicher Weise noch Verstärkungen 21 auf.

P_a_t_e_n_t_a_n_s_p_r_ü_c_h_e

1. Überfahrbrücke für Rampen u.dergl., deren Überfahrblech mit dem einen Ende an einer feststehenden Rampe angelenkt ist und deren anderes Ende eine ausschiebbare oder ausklappbare Verlängerung besitzt, mit der das Überfahrblech auf eine zu be- bzw. entladende Plattform auflegbar ist, dadurch gekennzeichnet, daß das Überfahrblech (1) beidseitig gegenüber der Verlängerung (2) vorsteht und neben der Verlängerung (2) beidseitig jeweils ein bei Nichtgebrauch der Brücke gegenüber der Vorderkante des Überfahrbleches (1) vorstehender auf dem Boden (4) unter dem Überfahrblech (1) befestigter bei Gebrauch der Brücke unter das Überfahrblech (1) bewegbarer Puffer (3) angeordnet ist.

2. Überfahrbrücke nach Anspruch 1, dadurch gekennzeichnet, daß auf der dem Überfahrblech (1) zugekehrten Seite am Puffer (3) ein Arbeitszylinder (5) zweckmäßig Hydraulikzylinder mit einem Ende vorzugsweise dem freien Ende der Kolbenstange (6) angelenkt ist, dessen (5) anderes Ende, vorzugsweise der Zylinderboden (7) auf dem Boden (4) unter dem Überfahrblech (1) gelenkig befestigt ist, wobei der Arbeitszylinder (5) ein beidseitig beaufschlagbarer ist.

3. Überfahrbrücke nach Anspruch 1 und/oder 2, dadurch gekennzeichnet, daß die Puffer (3) um eine am Boden (4) befestigte Achse (8) unter das Überfahrblech schwenkbar sind.

4. Überfahrbrücke nach einem oder mehreren der Ansprüche 1 - 3, dadurch gekennzeichnet, daß der Puffer (3) oberhalb des Vorderteiles (9) des Unterrahmens (10) angeordnet ist und diesem (9) gegenüber vorsteht.

2.

5. Überfahrbrücke nach einem oder mehreren der Ansprüche 1 - 4, dadurch gekennzeichnet, daß der Puffer (3) im Unterrahmen (10) unter das Überfahrblech (1) bewegbar, insbesondere um die Achse (8) unter das Überfahrblech (1) schwenkbar befestigt ist.

6. Überfahrbrücke nach einem oder mehreren der Ansprüche 2 - 5, dadurch gekennzeichnet, daß der Arbeitszylinder (5) mit seinem, dem Puffer (3) abgekehrten Ende, insbesondere dem Zylinderboden (7) gelenkig im Unterrahmen (10) befestigt ist.

7. Überfahrbrücke nach einem oder mehreren der Ansprüche 1 - 6, dadurch gekennzeichnet, daß das Überfahrblech (1) beidseitig neben der Verlängerung (2) nach unten gerichtete Anschläge (11) aufweist, an deren Vorderseite die Puffer (3) bei Nichtgebrauch der Brücke mit ihrer Rückseite anliegen.

8. Überfahrbrücke nach einem oder mehreren der Ansprüche 1 - 7, dadurch gekennzeichnet, daß die Puffer (3) aus Hartgummi bestehen, insbesondere aus Hartgummi, welches durch Textilgewebe verstärkt ist.

9. Überfahrbrücke nach einem oder mehreren der Ansprüche 1 - 8, dadurch gekennzeichnet, daß die Puffer (3) auf der dem Überfahrblech (1) zugekehrten Seite durch eine Metallplatte (12) verstärkt sind.

10. Überfahrbrücke nach Anspruch 9, dadurch gekennzeichnet, daß die Puffer (3) mittels der Metallplatte (12) auf dem Boden (4) befestigt, bzw. mittels der Metallplatte (12) an die Achse (8) angelenkt sind.

FIG.1

FIG.2

·1/1·

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 020 517 (WADDELL) <br><br> * Spalte 4, Zeilen 42-65; Spalte 7, Zeilen 34-57; Spalte 8, Zeilen 46-53; Abbildung 1 * <br><br> --- | 1,8 |
| | GB - A - 1 161 537 (T & S EQUIPMENT Cy.) <br><br> * Seite 3, Zeilen 6-38; Figuren 1 und 5 * <br><br> --- | 1,4,5 |
| | US - A - 3 280 414 (HTL IND.) <br><br> * Spalte 9, Zeilen 45-75; Spalte 10, Zeilen 1-64; Figuren 5-7 * <br><br> --- | 1,3,8 |
| | US - A - 3 596 303 (KELLEY) <br><br> * Spalte 5, Zeilen 4-7; Figur 11 * <br><br> --------- | 1,8-10 |

**KLASSIFIKATION DER ANMELDUNG (Int Cl.3)**

B 65 G 69/28

**RECHERCHIERTE SACHGEBIETE (Int. Cl.3)**

B 65 G

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17.07.1981 | OSTIJN |

EPA form 1503.1   06.78